# EUROPÄISCHE PATENTSCHRIFT

(11) **EP 2 754 584 B1**
(45) Veröffentlichungstag und Bekanntmachung des Hinweises auf die Patenterteilung: **27.01.2021**
(21) Anmeldenummer: 13199435.2
(22) Anmeldetag: 23.12.2013
(51) Int. Cl.: B60Q 1/50, B66F 9/075, B66F 17/00

(54) **Flurförderzeug mit Warnvorrichtung**
Industrial truck with warning device
Chariot de manutention avec dispositif d'alarme

(30) Priorität: 10.01.2013 DE 102013100200
(43) Veröffentlichungstag der Anmeldung: 16.07.2014
(73) Patentinhaber: Linde Material Handling GmbH, 63743 Aschaffenburg (DE)
(72) Erfinder: Rein, Benedikt, 63933 Mönchberg (DE); Bergmann, Frank, 63741 Aschaffenburg (DE)
(74) Vertreter: Patentship Patentanwaltsgesellschaft mbH

(56) Entgegenhaltungen:
- DE-A1- 10 240 227
- DE-A1-102006 002 960
- DE-A1-102009 001 348
- JP-A- 2008 143 505
- US-A1- 2011 292 667
- US-A1- 2012 025 964

## Beschreibung

Die Erfindung betrifft ein Flurförderzeug mit einer Warnvorrichtung, die einen Lichteffekt auf die Fahrbahn projizieren kann, wobei der Lichteffekt eine Projektionsfläche mit mindestens einem in Fahrtrichtung des Flurförderzeugs vorne angeordneten vorderen Warnbereich und in Fahrtrichtung des Flurförderzeugs hinten angeordneten hinteren Warnbereich aufweist, wobei die Projektionsfläche durch eine Begrenzungslinie und/oder eine ausgeleuchtete Fläche dargestellt ist.

Flurförderzeuge sind beispielsweise in Ausführungsformen als Gegengewichtsgabelstapler, Schubmaststapler sowie Lagertechnikgeräte bekannt. Insbesondere diese drei Arten von Flurförderzeugen werden in großem Umfang auf Betriebsgeländen und in Lagerbereichen eingesetzt, in denen sich auch Personen aufhalten, während gleichzeitig die Sichtverhältnisse durch Lagerregale und eingelagerte Lasten sowie die räumlichen Umstände eingeschränkt sind. Es ist bekannt, als Warneinrichtung vor herannahenden Flurförderzeugen optische Warneinrichtungen an den Flurförderzeugen vorzusehen, die die Aufmerksamkeit der Personen in der Umgebung erregen sollen. Eine seit langem bekannte und weit verbreitete Lösung hierfür sind rotierende Rundumleuchten oder blinkende Leuchten, die im oberen Bereich oder an einem Fahrerschutzdach der Flurförderzeuge angeordnet sind, häufig als gelbe Warnleuchten.

Nachteilig an den blinkenden Warnleuchten ist, dass aufgrund der oftmals großen Anzahl an gleichzeitig fahrenden Flurförderzeugen sowie dem andauernd blinkenden Licht, das möglicherweise noch über Reflexionen ständig in allen Bereichen eines Lagers wahrnehmbar ist, diese oft nicht konkret beachtet werden, oder nicht wahrgenommen wird, dass eine konkrete Gefahr durch ein Fahrzeug herannaht. Auch kann die ständige Wahrnehmbarkeit der Warnlichter als unangenehm empfunden werden und zu Akzeptanzproblemen führen.

In der US 2012/025964 A1 ist ein gattungsgemäßes Flurförderzeug mit Leuchten offenbart, welche konusförmige Bereiche vor oder hinter dem Fahrzeug ausleuchten können, um z.B. einen Fußgänger zu warnen.

Weiterhin sind in dem Stand der Technik, beispielsweise aus der DE 10 2006 002 960 A1, Flurförderzeuge mit einer optischen Warnvorrichtung bekannt, bei der ein jeweils in Fahrtrichtung weisender Lichteffekt als Sicherheitslicht auf die Fahrbahn projiziert wird, um Personen in der Umgebung vor dem herannahenden Flurförderzeug zu warnen. Dadurch kann beispielsweise gezielt eine in einem Gefahrenbereich eines herannahenden Flurförderzeug sich befindende Person durch den aufmerksamkeitserregenden, sich bewegenden Lichtfleck am Boden gewarnt werden, wobei das Sicherheitslicht meist in einem fest eingestellten Abstand vor dem Flurförderzeug und/oder auch, für den Fall der Rückwärtsfahrt, hinter dem Flurförderzeug auf die Fahrbahn projiziert wird. Der Lichteffekt wird jeweils in Fahrtrichtung angeschaltet und kann in einer alternativen Ausführungsform abhängig von Fahrgeschwindigkeit seinen Abstand zu dem Flurförderzeug und/oder seine Größe ändern.

Nachteilig an diesem Stand der Technik ist, dass ein Lichtfleck allein nicht immer optimal wahrnehmbar ist. Weiterhin ist nachteilig bei den Ausführungsformen, die sich abhängig von der Fahrgeschwindigkeit verändern, dass dadurch Aufwand bei der Umsetzung entsteht.

Der Erfindung liegt daher die Aufgabe zu Grunde, ein Flurförderzeug der eingangs genannten Gattung zur Verfügung zu stellen, mit dem die Warnfunktion für Personen in der Umgebung des Flurförderzeugs verbessert wird.

Diese Aufgabe wird durch ein Flurförderzeug mit den Merkmalen des Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Flurförderzeug mit einer Warnvorrichtung, die einen Lichteffekt auf die Fahrbahn projizieren kann, der Lichteffekt eine Projektionsfläche mit mindestens einem in Fahrtrichtung des Flurförderzeugs vorne angeordneten vorderen Warnbereich und einem in Fahrtrichtung des Flurförderzeugs hinten angeordneten hinteren Warnbereich aufweist, wobei die Projektionsfläche durch eine Begrenzungslinie und/oder eine ausgeleuchtete Fläche dargestellt ist, wobei in Abhängig von einem Lenkeinschlag des Flurförderzeugs der in Fahrtrichtung vordere Warnbereich zur Innenseite einer durch die Richtung des Lenkeinschlags bestimmten Kurvenbahn orientiert ist und/oder der in Fahrtrichtung hintere Warnbereich zur Außenseite der durch die Richtung des Lenkeinschlags bestimmten Kurvenbahn orientiert ist, wobei der in Fahrtrichtung hinten sich befindende Warnbereich im Wesentlichen aus einem Dreiviertelkreis besteht, dessen Mittelpunkt ungefähr der auf der Kurvenfahrt äußeren Fahrzeugecke entspricht.

Dabei kann der jeweilige Warnbereich als Teilbereich der Projektionsfläche allein durch eine beleuchtete Begrenzungslinie markiert sein. Alternativ kann die gesamte Fläche ausgeleuchtet sein. Schließlich ist es auch möglich, dass die gesamte Fläche der Warnbereiche bzw. der Projektionsfläche ausgeleuchtet wird und die Begrenzungslinie besonders hervorgehoben ist, beispielsweise durch eine höhere Intensität. Vorteilhaft kann eine einfache geometrische Form genommen werden, ohne dass größere Berechnungen erforderlich sind. Indem nicht nur ein Leuchtpunkt oder Leuchtfleck als Warnvorrichtung dient, sondern ein flächiger Warnbereich markiert wird, der sich bis an das Flurförderzeug heran erstreckt, wird mehr Aufmerksamkeit bei Personen erregt, die in diesen Bereich hineingeraten oder sich diesem annähern. Dies gilt insbesondere, wenn die Projektionsfläche flächig ausgeleuchtet wird. Beispielsweise kann eine ausgeleuchtete Fläche für die Warnbereiche bzw. die Projektionsfläche sich bis zu dem Flurförderzeug erstrecken. Ebenso kann eine allein durch eine Begrenzungslinie gebildete Warnfläche bzw. Projektionsfläche sich dadurch auszeichnen, dass die Begrenzungslinie immer bis zum Fahrzeugrand des Flurförderzeugs ausgebildet ist.

In Abhängig von einem Lenkeinschlag des Flurförderzeugs ist der in Fahrtrichtung vordere Warnbereich zur Innenseite einer durch die Richtung des Lenkeinschlags bestimmten Kurvenbahn orientiert und/oder der in Fahrtrichtung hintere Warnbereich zur Außenseite der durch die Richtung des Lenkeinschlags bestimmten Kurvenbahn orientiert.

Insbesondere Flurförderzeuge, die von einem mitfahrenden Fahrer bedient werden, haben ein oder mehrere gelenkte Räder mit einem sehr großen Lenkeinschlag und sehr kleinen Wendekreisen. Beispiele hierfür sind Schubmaststapler und Lagerbediengeräte, die eine aus einem Einzelrad oder mehreren Rädern bestehende Hinterachse haben, deren Räder eingeschlagen werden können, wobei zum Teil Einschlagwinkel bis praktisch quer zur Fahrzeuglängsachse erreicht werden. Insbesondere gilt dies auch für Gegengewichtsgabelstapler mit gelenkter Hinterachse. Dadurch schwenkt aber beispielsweise das Heck des Fahrzeugs sehr stark seitlich aus bei vollem Lenkeinschlag. Umgekehrt überstreicht eine vor dem Fahrzeug angebrachte Lastaufnahmevorrichtung, insbesondere eine Lastgabel, bei Kurvenfahrt den Raum seitlich. Es ist daher vorteilhaft, wenn der jeweilige Warnbereich, der in Fahrtrichtung nach vorne liegt, beispielsweise bei Geradeausfahrt derjenige, der vor einer Lastaufnahmevorrichtung wie etwa einer Lastgabel angeordnet ist, in die Richtung zur Kurve nach innen orientiert wird, in die die Lastgabel schwenkt. Beispielsweise bei einer vorwärts gefahrenen Linkskurve ist dies in Längsrichtung neben oder vor der Lastgabel links. Da das Heck dabei gleichzeitig zur anderen Seite ausschwenkt, wird der in Bezug zur Fahrtrichtung hinten liegende Warnbereich zur Außenseite orientiert. Bei einer Rückwärtsfahrt sind die Richtungen entsprechend umgekehrt, da dann beispielsweise bei einem Gegengewichtsgabelstapler das Heckgewicht von außen kommend in Richtung der Kurve nach innen schwenkt und die Lastgabel nach außen schwenkt, somit die Gefahrenbereiche auf der jeweilig gegenüberliegenden Seite liegen. Vorteilhaft erfolgt dies zugleich für die Vorder- und Rückseite des Flurförderzeugs somit für beide Warnbereiche, da die beschriebenen Gefahrenmomente immer zugleich auftreten. Es ist jedoch auch denkbar, dass nur einer der Warnbereiche bei einer Kurvenfahrt zur Seite orientiert wird.

Der in Fahrtrichtung hinten sich befindende Warnbereich besteht im Wesentlichen aus einem Dreiviertelkreis, dessen Mittelpunkt ungefähr der auf der Kurvenbahn äußeren Fahrzeugecke entspricht.

Damit wird bei einer Kurvenfahrt besonders die Ecke des Fahrzeugs betont, die durch das Ausschwenken den am weitesten außen befindlichen und somit potentiell gefährlichsten Punkt darstellt.

Der vordere Warnbereich und/oder der hintere Warnbereich können aus einem sich über die Breite des Flurförderzeugs erstreckenden Rechteck bestehen.

Gegenüber einem reinen Lichtfleck bzw. Lichtpunkt wird dadurch ein ganzer Bereich markiert, der noch dazu genau dem entspricht, den das Flurförderzeug bei Weiterfahrt einnehmen würde und in dem somit eine akute Gefahr für Personen in der Umgebung des Flurförderzeugs bestehen könnte.

Vorteilhaft bestehen der vordere Warnbereich und/oder der hintere Warnbereich aus einem Trapez, dessen Basis der Breite des Flurförderzeugs entspricht.

Je nachdem wie stark der Winkel ist, mit dem sich das Trapez von dem Flurförderzeug weg aufweitet, kann damit auch markiert werden, welcher Bereich bei einer nicht genauen Geradeausfahrt, beispielsweise bei leichtem Lenkeinschlag, von dem Flurförderzeug erreicht würde.

In einer Weiterbildung ist die Projektionsfläche eine das Flurförderzeug insgesamt umschließende Fläche, die vor und hinter dem Flurförderzeug sich mit einem größeren Abstand von dem Flurförderzeug erstreckt.

Damit wird von jeder Richtung kommend für eine Person in der Umgebung das Flurförderzeug von der Projektionsfläche umgeben und die Person in der Umgebung auffällig auf das Flurförderzeug hingewiesen. Insbesondere ist auch zu berücksichtigen, dass auch bei einer nahen Vorbeifahrt Gefahrenmomente entstehen können und auf diese somit hingewiesen wird. Vorteilhaft ist dies, wenn beispielsweise eine Person in der Umgebung aus einer Regalgasse heraustritt, an der in demselben Moment quer ein Flurförderzeug, etwa ein Gabelstapler, mit geringem Abstand vorbeifährt.

Die Projektionsfläche kann eine das Flurförderzeug umschließenden Ellipse sein.

Dies ist eine leicht umzusetzende Form, die insbesondere auch die Möglichkeit bietet, den vorderen und hinteren Warnbereich für die besonderen Gefahrenbereiche vor und hinter dem Flurförderzeug durch entsprechendes "In-Die-Länge-Ziehen" darzustellen.

Der in Fahrtrichtung vorne sich befindende Warnbereich kann aus einem sich über die Breite des Flurförderzeugs erstreckenden Rechteck verbunden mit einem zur Innenseite der Kurvenbahn sich anschließenden Halbkreis bestehen.

Somit kann wie bei Geradeausfahrt der komplette Warnbereich in Fahrtrichtung dargestellt werden und bei einer Kurvenfahrt zusätzlich vor der seitlichen Bewegung gewarnt werden. Die beschriebene Form ist dabei geometrisch einfach und gut umzusetzen.

Das Flurförderzeug kann ein Gegengewichtsgabelstapler mit gelenkten hinteren Rädern sein.

Solche Gegengewichtsgabelstapler fahren in sehr weiten Bereichen von Werksgeländen in denen sich Mitarbeiter aufhalten, insbesondere auch außerhalb von expliziten Lagerbereichen, die nicht andauernd vertraut sind im Umgang mit Gabelstaplern, und zeigen die zuvor beschriebene Charakteristik des starken Ausschwenkens des Heckgewichts wie auch des Überstreichens einer Fläche mit der Lastgabel zur Kurveninnenseite. Daher sind die zuvor beschriebenen Merkmale bei Gegengewichtsgabelstaplern besonders vorteilhaft.

Die ausgeleuchtete Fläche kann als Projektionsfläche in der Intensität in Richtung auf das Flurförderzeug zunehmen.

Dadurch wird mit der zunehmenden Helligkeit automatisch der Blick in Richtung auf das Flurförderzeug gerichtet.

Vorteilhaft nimmt die Größe der Projektionsfläche und/oder die Intensität mit der Fahrgeschwindigkeit zu.

Dies ermöglicht eine leichte und einfache Anpassung an das gestiegene Gefahrenpotential eines schneller fahrenden Flurförderzeugs.

Der Lichteffekt kann durch mindestens eine an einem Fahrerschutzdach angebrachte Leuchtvorrichtung erzeugt werden.

Durch die relativ hoch angebrachte Position wird eine präzise Beleuchtung der Begrenzungslinie bzw. bis zur Begrenzungslinie ermöglicht.

Der Lichteffekt kann durch mindestens eine im Bereich eines Fahrzeugbodens angebrachte Leuchtvorrichtung erzeugt werden.

Tief angebrachte Leuchtvorrichtungen, beispielsweise am Rand des Flurförderzeugs im Bereich des Unterbodens oder beispielsweise am unteren Rand des Heckgewichts ermöglichen ein Ausleuchten, ohne dass es zu Abschattungen etwa durch die Lastaufnahmevorrichtung kommt, wenn die Leuchtvorrichtung an einem Fahrschutzdach angebracht ist.

Die Leuchtvorrichtung kann ein Laser sein.

In einer Ausgestaltung des Flurförderzeugs ist die Leuchtvorrichtung aus Leuchtdioden gebildet.

Weitere Vorteile und Einzelheiten der Erfindung werden anhand der in den schematischen Figuren dargestellten Ausführungsbeispiele näher erläutert. Hierbei zeigt
- Fig. 1: ein Ausführungsbeispiel eines erfindungsgemäßen Flurförderzeugs schematisch in Seitenansicht,
- Fig. 2: schematisch das Flurförderzeug der Fig. 1 mit einem ersten Ausführungsbeispiel einer Projektionsfläche in Aufsicht,
- Fig. 3: schematisch das Flurförderzeug der Fig. 1 mit einem zweiten Ausführungsbeispiel einer Projektionsfläche in Aufsicht,
- Fig. 4: schematisch das Flurförderzeug der Fig. 1 mit einem dritten Ausführungsbeispiel einer Projektionsfläche in Aufsicht,
- Fig. 5a: das Ausführungsbeispiel der Fig. 4 mit der Projektionsfläche bei Kurvenfahrt vorwärts rechts in Aufsicht,
- Fig. 5b: das Ausführungsbeispiel der Fig. 4 mit der Projektionsfläche bei Kurvenfahrt vorwärts links in Aufsicht,
- Fig. 5c: das Ausführungsbeispiel der Fig. 4 mit der Projektionsfläche bei Kurvenfahrt rückwärts rechts in Aufsicht und
- Fig. 5d: das Ausführungsbeispiel der Fig. 4 mit der Projektionsfläche bei Kurvenfahrt rückwärts links in Aufsicht.

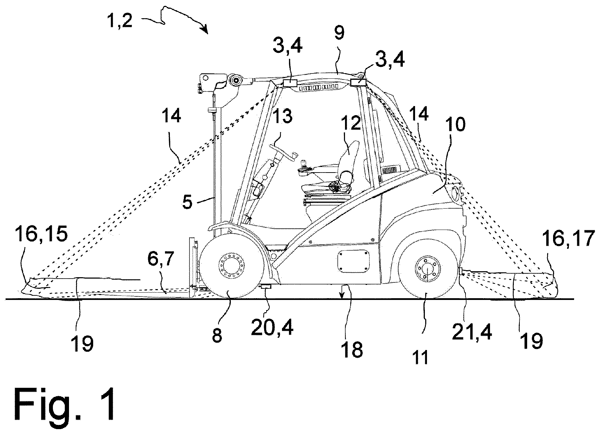

Die Fig. 1 zeigt in Seitenansicht eine schematische Darstellung eines erfindungsgemäßen Flurförderzeugs 1, hier beispielsweise eines Gegengewichtsgabelstaplers 2, mit einer ersten, vorne angeordneten Leuchtvorrichtung 3 und einer hinten angeordneten zweiten Leuchtvorrichtung 3, jeweils in Form eines Lasers 4.

Der Gegengewichtsgabelstapler 2 weist eine an einem Hubmast 5 geführte Lasthandhabungsvorrichtung 6 in Form einer von zwei Gabelzinken gebildeten Lastgabel 7 auf. Der Hubmast 5 ist über einer Vorderachse mit Vorderrädern 8 angeordnet, über die der Gegengewichtsgabelstapler 2 angetrieben wird. Hinter dem Hubmast 5 befindet sich ein Fahrerschutzdach 9 und ein Gegengewicht 10. Unterhalb des Gegengewichts 10 befinden sich gelenkte Hinterräder 11, mit denen der Gegengewichtsgabelstapler 2 gelenkt wird. Unterhalb des Fahrerschutzdaches 9 ist ein Fahrersitz 12 mit einem Lenkrad 13 angeordnet.

Die erste, vordere Leuchtvorrichtung 3, wie auch die zweite, hintere Leuchtvorrichtung 3 sind an dem Fahrerschutzdach 9 bevorzugt im oberen Bereich angeordnet und senden Laserlicht 14 der jeweiligen Laser 4 oder gebündeltes Licht einer Lichtquelle, wie beispielsweise Leuchtdioden, als Lichteffekt aus, durch das eine Projektionsfläche 16 auf die Fahrbahn 18 projiziert wird, wobei die Projektionsfläche 16 einen vorderen Warnbereich 15 und einen hinteren Warnbereich 17 aufweist. Die Projektionsfläche 16 bzw. der vordere Warnbereich 15 wie auch der hintere Warnbereich 17 kann dabei dadurch markiert werden, dass eine Begrenzungslinie 19 durch Licht markiert wird. Alternativ oder zugleich kann aber auch die gesamte Fläche der Projektionsfläche 16 ausgeleuchtet werden, wobei es auch möglich ist, die Intensität des Lichts mit zunehmender Nähe zu dem Flurförderzeug 1 zu erhöhen. Eine weitere Leuchtvorrichtung 20 ist im Bereich des vorderen Fahrzeugbodens angebracht und leuchtet in den vorderen Warnbereiche 15. Ebenso ist im hinteren unteren Bereich des Gegengewichts 10 eine weitere Leuchtvorrichtung 21 angeordnet, die in den hinteren Warnbereiche 17 leuchtet. Diese weiteren Leuchtvorrichtungen 20,21 können zusätzlich oder alternativ zu den Leuchtvorrichtungen 3 an dem Fahrerschutzdach 9 vorgesehen werden. Durch diese weiteren Leuchtvorrichtungen 20,21, die auch als Laser 4 ausgeführt sein können, ist es möglich, auch Bereiche auszuleuchten in dem vorderen Warnbereich 15 bzw. hinteren Warnbereich 17 der Projektionsfläche 16, die ansonsten abgeschattet werden durch Teile des Hubmastes 5 oder des Gegengewichts 10.

Die Erfindung ist nicht auf das hier geschilderte Beispiel eines Gegengewichtsgabelstaplers 2 als Flurförderzeug 1 beschränkt und kann bei allen Arten von Flurförderzeugen angewandt werden

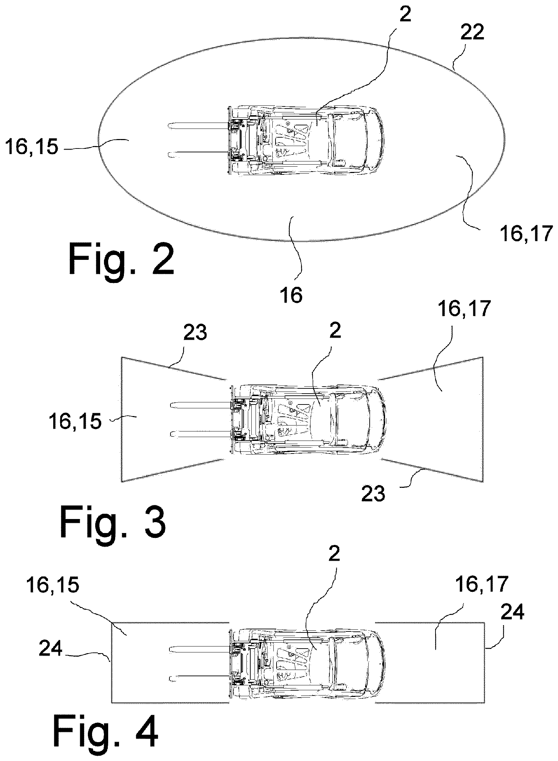

Die Fig. 2 zeigt schematisch das Flurförderzeug der Fig. 1 mit einem ersten Ausführungsbeispiel der Projektionsfläche 16 in Form einer Ellipse 22, die den Gabelstapler 2 vollständig umgibt. Die Ellipse 22 ist dabei so lang gestreckt geformt, dass sich vor dem Gabelstapler 2 der vordere Warnbereich 15 und hinter dem Gabelstapler 2 der hintere Warnbereich 17 ergibt. Die Projektionsfläche befindet sich jedoch auch seitlich des Gabelstaplers 2.

Die Fig. 3 zeigt schematisch das Flurförderzeug der Fig. 1 mit einem zweiten Ausführungsbeispiel der Projektionsfläche 16, bei der der vordere Warnbereich 15 aus einem Trapez 23 besteht, dessen Basislinie der Breite des Gabelstaplers 2 entspricht und das sich vor dem Gabelstapler 2 weiter verbreitert. Ebenso besteht die hintere Warnfläche 17 aus einem weiteren Trapez 23, dessen Basislinie ebenfalls der Breite des Gabelstaplers 2 entspricht und sich hinter dem Gabelstapler 2 weiter verbreitert.

Fig. 4 zeigt schematisch das Flurförderzeug der Fig. 1 mit einem dritten Ausführungsbeispiel einer Projektionsfläche 16, bei der der vordere Warnbereich 15 aus einem Rechteck 24 besteht, dass sich über die Breite des Gabelstaplers 2 erstreckt. Ebenso besteht die hintere Warnfläche 17 aus einem weiteren Rechteck 24, das sich über die Breite des Gabelstaplers 2 erstreckt.

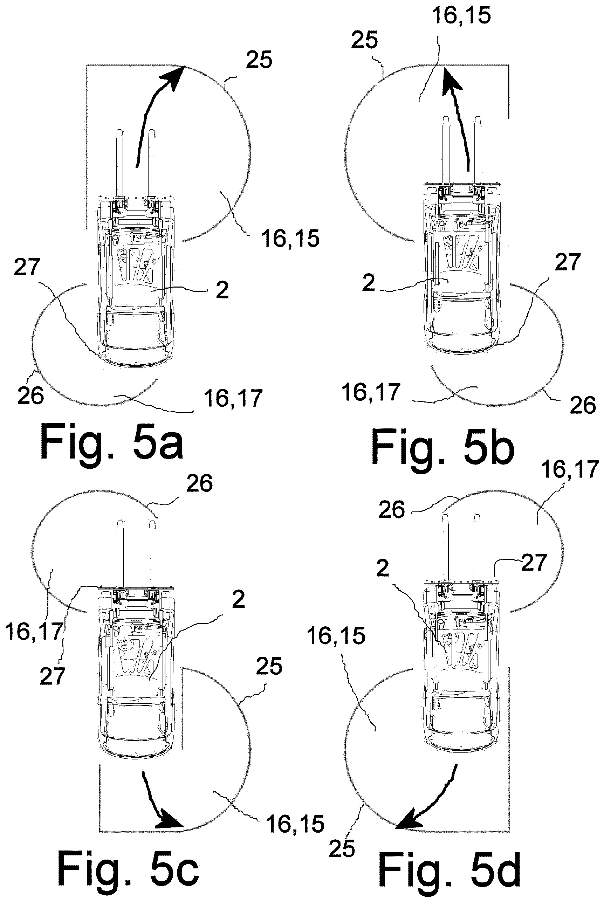

Die Fig. 5a zeigt das Ausführungsbeispiel der Fig. 4 mit der Projektionsfläche 16 bei Kurvenfahrt vorwärts rechts, wie durch den Pfeil angedeutet. Dabei werden die Richtungen "rechts" und "links" in Bezug auf eine Fahrzeuglängsachse mit Blick zur Vorderseite des Fahrzeuges unabhängig von einer Fahrtrichtung definiert. Der in Fahrtrichtung des Gabelstaplers 2 vordere Warnbereich 15 der Projektionsfläche 16 ist zur Innenseite der Kurvenbahn, hier rechts, orientiert und besteht aus einem sich über die Breite des Flurförderzeugs erstreckenden Rechteck, dessen kurveninnere Seitenlinie durch einen Halbkreis 25 ersetzt ist. Der in Bezug auf die Fahrtrichtung des Gabelstaplers 2 hintere Warnbereich 17 der Projektionsfläche 16 ist zur Außenseite der Kurvenbahn, hier links, orientiert und besteht aus einem Dreiviertelkreis 26, wobei dessen Mittelpunkt 27 ungefähr sich an der Position der linken und somit kurvenaußenseitigen, hinteren Ecke des Gabelstaplers 2 befindet. Dabei kann, sobald der Lenkeinschlag des Lenkrads 13 bei Fahrtrichtung vorwärts einen gewissen Wert überschreitet die Projektionsfläche 16 aus der Darstellung in der Fig. 4 in die Form der der Fig. 5a umgewandelt werden.

Die Fig. 5b zeigt das Ausführungsbeispiel der Fig. 4 mit der Projektionsfläche 16 bei Kurvenfahrt vorwärts links, wie durch den Pfeil angedeutet. Der in Fahrtrichtung des Gabelstaplers 2 vordere Warnbereich 15 der Projektionsfläche 16 ist zur Innenseite der Kurvenbahn, hier links, orientiert und besteht aus einem sich über die Breite des Flurförderzeugs erstreckenden Rechteck, dessen kurveninnere Seitenlinie durch einen Halbkreis 25 ersetzt ist. Der in Bezug auf die Fahrtrichtung des Gabelstaplers 2 hintere Warnbereich 17 der Projektionsfläche 16 ist zur Außenseite der Kurvenbahn, hier rechts, orientiert und besteht wiederum aus einem Dreiviertelkreis 26, wobei dessen Mittelpunkt 27 ungefähr sich an der Position der rechten und somit kurvenaußenseitigen, hinteren Ecke des Gabelstaplers 2 befindet.

Die Fig. 5c zeigt das Ausführungsbeispiel der Fig. 4 mit der Projektionsfläche 16 bei Kurvenfahrt rückwärts rechts, wie durch den Pfeil angedeutet. Der in Fahrtrichtung des Gabelstaplers 2 vordere und aus Rechteck sowie Halbkreis 25 gebildete Warnbereich 15 der Projektionsfläche 16 ist zur Innenseite der Kurvenbahn, hier rechts, orientiert. Der in Bezug auf die Fahrtrichtung des Gabelstaplers 2 hintere Warnbereich 17 der Projektionsfläche 16 besteht wiederum aus einem Dreiviertelkreis 26 mit dem ungefähren Mittelpunkt 27, einer in diesem Fall vorderen Fahrzeugecke kurvenaußenseitig.

Die Fig. 5d zeigt das Ausführungsbeispiel der Fig. 4 mit der Projektionsfläche 16 bei Kurvenfahrt rückwärts links, wie durch den Pfeil angedeutet. Der in Fahrtrichtung des Gabelstaplers 2 vordere und aus Rechteck sowie Halbkreis 25 gebildete Warnbereich 15 der Projektionsfläche 16 ist zur Innenseite der Kurvenbahn, links, orientiert. Der in Bezug auf die Fahrtrichtung des Gabelstaplers 2 hintere Warnbereich 17 der Projektionsfläche 16 besteht wiederum aus einem Dreiviertelkreis 26, dessen Mittelpunkt 27 ungefähr sich an der Position der rechten und somit kurvenaußenseitigen, vorderen Ecke des Gabelstaplers 2 befindet.

## Patentansprüche

1. Flurförderzeug mit einer Warnvorrichtung, die einen Lichteffekt auf die Fahrbahn (18) projizieren kann,
wobei der Lichteffekt eine Projektionsfläche (16) mit mindestens einem in Fahrtrichtung des Flurförderzeugs (1) vorne angeordneten vorderen Warnbereich (15) und in Fahrtrichtung des Flurförderzeugs (1) hinten angeordneten hinteren Warnbereich (17) aufweist, wobei die Projektionsfläche (16) durch eine Begrenzungslinie (19) und/oder eine ausgeleuchtete Fläche dargestellt ist,
**dadurch gekennzeichnet, dass** in Abhängigkeit von einem Lenkeinschlag des Flurförderzeugs (1) der in Fahrtrichtung vordere Warnbereich (15) zur Innenseite einer durch die Richtung des Lenkeinschlags bestimmten Kurvenbahn orientiert ist und/oder der in Fahrtrichtung hintere Warnbereich (17) zur Außenseite der durch die Richtung des Lenkeinschlags bestimmten Kurvenbahn orientiert ist, und wobei der in Fahrtrichtung hinten sich befindende Warnbereich (17) im Wesentlichen aus einem Dreiviertelkreis (26) besteht, dessen Mittelpunkt (27) ungefähr der auf der Kurvenfahrt äußeren Fahrzeugecke entspricht.

2. Flurförderzeug nach Anspruch 1,
**dadurch gekennzeichnet, dass**, beim Geradeausfahren, der vordere Warnbereich (15) und/oder der hintere Warnbereich (17) aus einem sich über die Breite des Flurförderzeugs erstreckenden Rechteck (24) bestehen.

3. Flurförderzeug nach Anspruch 1 oder 2,
**dadurch gekennzeichnet, dass**, beim Geradeausfahren, der vordere Warnbereich (15) und/oder der hintere Warnbereich (17) aus einem Trapez (23) bestehen, dessen Basis der Breite des Flurförderzeugs (1) entspricht.

4. Flurförderzeug nach einem der Ansprüche 1 bis 2,
**dadurch gekennzeichnet, dass**, beim Geradeausfahren, die Projektionsfläche (16) eine das Flurförderzeug (1) insgesamt umschließende Fläche ist, die vor und hinter dem Flurförderzeug (1) sich mit einem größeren Abstand von dem Flurförderzeug (1) erstreckt.

5. Flurförderzeug nach Anspruch 4,
**dadurch gekennzeichnet,**
**dass** die Projektionsfläche (16) eine das Flurförderzeug (1) umschließenden Ellipse (22) ist.

6. Flurförderzeug nach einem der vorangehenden Ansprüche,
**dadurch gekennzeichnet,**
**dass** der in Fahrtrichtung vorne sich befindende Warnbereich (15) aus einem sich über die Breite des Flurförderzeugs erstreckenden Rechteck verbunden mit einem zur Innenseite der Kurvenfahrt sich anschließenden Halbkreis (25) besteht.

7. Flurförderzeug nach einem der vorangehenden Ansprüche,
**dadurch gekennzeichnet,**
**dass** das Flurförderzeug (1) ein Gegengewichtsgabelstapler (2) mit gelenkten hinteren Rädern (11) ist.

8. Flurförderzeug nach einem der Ansprüche 1 bis 7,
**dadurch gekennzeichnet,**
**dass** die ausgeleuchtete Fläche als Projektionsfläche (16) in der Intensität in Richtung auf das Flurförderzeug (1) zunimmt.

9. Flurförderzeug nach einem der Ansprüche 1 bis 8,
**dadurch gekennzeichnet,**
**dass** die Größe der Projektionsfläche (16) und/oder die Intensität mit der Fahrgeschwindigkeit zunimmt.

10. Flurförderzeug nach einem der Ansprüche 1 bis 9,
**dadurch gekennzeichnet,**
**dass** der Lichteffekt durch mindestens eine an einem Fahrerschutzdach (9) angebrachte Leuchtvorrichtung (3) erzeugt wird.

11. Flurförderzeug nach einem der Ansprüche 1 bis 10,
**dadurch gekennzeichnet,**
**dass** der Lichteffekt durch mindestens eine im Bereich eines Fahrzeugbodens angebrachte Leuchtvorrichtung (20,21) erzeugt wird.

12. Flurförderzeug nach einem der Ansprüche 1 bis 11,
**dadurch gekennzeichnet,**
**dass** die Leuchtvorrichtung (3,20,21) ein Laser (4) ist.

13. Flurförderzeug nach einem der Ansprüche 1 bis 12,
**dadurch gekennzeichnet,**
**dass** die Leuchtvorrichtung (3,20,21) aus Leuchtdioden gebildet ist.

## Claims

1. Industrial truck having a warning device which can project a light effect onto the roadway (18),
wherein the light effect has a projection area (16) comprising at least one warning area (15) arranged in front in the direction of travel of the industrial truck (1) and a rear warning area (17) arranged in the rear in the direction of travel of the industrial truck (1), wherein the projection area (16) is represented by a boundary line (19) and/or an illuminated area,
**characterized in that** depending on a steering angle of the industrial truck (1), the front warning area (15) in the direction of travel is oriented towards the inside of a curve determined by the direction of the steering angle, and/or the rear warning area (17) in the direction of travel is oriented towards the outer side of the curve determined by the direction of the steering angle, and wherein the warning area (17) located at the rear in the direction of travel substantially consists of a three-quarter circle (26), the centre (27) of which corresponds approximately to the outer vehicle corner when cornering.

2. Industrial truck according to Claim 1,
**characterized in that**
during straight-line travel, the front warning area (15) and/or the rear warning area (17) consist/s of a rectangle (24) extending over the width of the industrial truck.

3. Industrial truck according to Claim 1 or 2,
**characterized in that**
during straight-line travel, the front warning area (15) and/or the rear warning area (17) consist/s of a trapezium (23), the base of which corresponds to the width of the industrial truck (1).

4. Industrial truck according to one of Claims 1 to 2,
**characterized in that**
during straight-line travel, the projection area (16) is an area enclosing the industrial truck (1) overall, which extends in front of and behind the industrial truck (1) at a greater distance from the industrial truck (1).

5. Industrial truck according to Claim 4,
**characterized in that**
the projection area (16) is an ellipse (22) enclosing the industrial truck (1).

6. Industrial truck according to one of the preceding claims,
**characterized in that**
the warning area (15) located in front in the direction of travel consists of a rectangle extending over the width of the industrial truck and connected to a semicircle (25) adjoining the inside of the curve.

7. Industrial truck according to one of the preceding claims,
**characterized in that**
the industrial truck (1) is a counterbalanced forklift truck (2) with steered rear wheels (11).

8. Industrial truck according to one of Claims 1 to 7,
**characterized in that**
the illuminated area, as a projection area (16), increases in intensity in the direction of the industrial truck (1).

9. Industrial truck according to one of Claims 1 to 8,
**characterized in that**
the size of the projection area (16) and/or the intensity increases with the speed of travel.

10. Industrial truck according to one of Claims 1 to 9,
**characterized in that**
the light effect is produced by at least one lighting device (3) attached to a driver's canopy (9).

11. Industrial truck according to one of Claims 1 to 10,
**characterized in that**
the light effect is produced by at least one lighting device (20, 21) attached in the area of a vehicle floor.

12. Industrial truck according to one of Claims 1 to 11,
**characterized in that**
the lighting device (3, 20, 21) is a laser (4).

13. Industrial truck according to one of Claims 1 to 12,
**characterized in that**
the lighting device (3, 20, 21) is formed from light-emitting diodes.

## Revendications

1. Chariot de manutention avec un dispositif d'alarme qui peut projeter un effet lumineux sur la voie de circulation (18),
l'effet lumineux présentant une surface de projection (16) avec au moins une zone d'alarme avant (15) disposée à l'avant dans le sens de la marche du chariot de manutention (1) et une zone d'alarme arrière (17) disposée à l'arrière dans le sens de la marche du chariot de manutention (1), la surface de projection (16) étant représentée par une ligne de délimitation (19) et/ou une surface éclairée,
**caractérisé en ce qu'**en fonction d'un braquage du chariot de manutention (1), la zone d'alarme avant (15) dans le sens de la marche est orientée vers l'intérieur d'un chemin incurvé déterminé par la direction du braquage, et/ou la zone d'alarme arrière (17) dans le sens de la marche est orientée vers l'extérieur du chemin incurvé déterminé par la direction du braquage, et dans lequel la zone d'alarme (17) située à l'arrière dans le sens de la marche est composée substantiellement d'un trois-quarts de cercle (26) dont le centre (27) correspond approximativement à l'angle de véhicule extérieur dans le virage.

2. Chariot de manutention selon la revendication 1, **caractérisé en ce qu'**en marche avant, la zone d'alarme avant (15) et/ou la zone d'alarme arrière (17) sont composées d'un rectangle (24) s'étendant sur la largeur du chariot de manutention.

3. Chariot de manutention selon la revendication 1 ou 2, **caractérisé en ce qu'**en marche avant, la zone d'alarme avant (15) et/ou la zone d'alarme arrière (17) sont composées d'un trapèze (23) dont la base correspond à la largeur du chariot de manutention (1).

4. Chariot de manutention selon l'une quelconque des revendications 1 et 2, **caractérisé en ce qu'**en marche avant, la surface de projection (16) présente une surface entourant entièrement le chariot de manutention (1) et qui s'étend devant et derrière le chariot de manutention (1) à une plus grande distance du chariot de manutention (1).

5. Chariot de manutention selon la revendication 4, **caractérisé en ce que** la surface de projection (16) est une ellipse (22) entourant le chariot de manutention (1) .

6. Chariot de manutention selon l'une quelconque des revendications précédentes, **caractérisé en ce que** la zone d'alarme (15) se trouvant à l'avant dans le sens de la marche est composée d'un rectangle s'étendant sur la largeur du chariot de manutention en combinaison avec un demi-cercle (25) adjacent vers l'intérieur du virage.

7. Chariot de manutention selon l'une quelconque des revendications précédentes, **caractérisé en ce que** le chariot de manutention (1) est un chariot élévateur à fourche à contrepoids (2) doté de roues arrière directrices (11).

8. Chariot de manutention selon l'une quelconque des revendications 1 à 7, **caractérisé en ce que** la surface éclairée en tant que surface de projection (16) augmente en intensité en direction du chariot de manutention (1).

9. Chariot de manutention selon l'une quelconque des revendications 1 à 8, **caractérisé en ce que** la taille de la surface de projection (16) et/ou l'intensité augmente(nt) avec la vitesse de déplacement.

10. Chariot de manutention selon l'une quelconque des revendications 1 à 9, **caractérisé en ce que** l'effet lumineux est généré par au moins un dispositif d'éclairage (3) fixé à un toit de protection du conducteur (9).

11. Chariot de manutention selon l'une quelconque des revendications 1 à 10, **caractérisé en ce que** l'effet lumineux est généré par au moins un dispositif d'éclairage (20, 21) fixé dans la zone d'un plancher de véhicule.

12. Chariot de manutention selon l'une quelconque des revendications 1 à 11, **caractérisé en ce que** le dispositif d'éclairage (3, 20, 21) est un laser (4).

13. Chariot de manutention selon l'une quelconque des revendications 1 à 12, **caractérisé en ce que** le dispositif d'éclairage (3, 20, 21) est formé par des diodes électroluminescentes.
